# FASCICULE DE BREVET EUROPEEN

(11) **EP 3 935 273 B1**
(45) Date de publication et mention de la délivrance du brevet: **18.01.2023**
(21) Numéro de dépôt: 20721674.8
(22) Date de dépôt: 06.03.2020
(51) Int. Cl.: F02K 3/06, F01D 1/26, F02K 3/072

(54) **TURBINE À GAZ CONTRAROTATIVE POUR AÉRONEF À DOUBLE ROTOR**
GEGENLÄUFIGE GASTURBINE FÜR EIN FLUGZEUG
COUNTER ROTATING GAS TURBINE FOR AN AIRCRAFT

(30) Priorité: 08.03.2019 FR 1902398
(43) Date de publication de la demande: 12.01.2022
(73) Titulaire: SAFRAN AIRCRAFT ENGINES, 75015 Paris (FR)
(72) Inventeur: SULTANA, Patrick, 77550 Moissy-Cramayel (FR); RENON, Olivier, 77550 Moissy-Cramayel (FR); ZAMAI, Laurent Cédric, 77550 Moissy-Cramayel (FR); COIFFIER, Clément Charles Jérémy, 77550 Moissy-Cramayel (FR)
(74) Mandataire: Ernest Gutmann - Yves Plasseraud S.A.S.
(86) Numéro de dépôt international: PCT/FR2020/000051
(87) Numéro de publication internationale: WO 2020/183074

(56) Documents cités:
- EP-A1- 0 356 305
- EP-A1- 3 015 714
- US-A1- 2018 258 858

## Description

### Domaine technique de l'invention

Le domaine de la présente invention est celui des turbomachines à gaz pour aéronefs, et en particulier des turbofans ou réacteurs à double flux, pour l'aéronautique.

### Etat de la technique antérieure

En préambule, il est d'emblée précisé que :
- toute turbomachine et/ou turbine évoquée ici présente typiquement un axe X commun sensiblement parallèlement auquel du gaz circule d'amont vers l'aval, cet axe étant l'axe de rotation de tout rotor de cette turbomachine ou turbine,
- extérieur et intérieur se rapportent à des positions radiales à l'axe X ; est extérieur ce qui plus éloigné de l'axe X et intérieur ce qui en est plus proche, et
- circonférentiellement (ou tangentiellement) a pour sens : autour de l'axe X, pour en faire le tour.

Une turbomachine à gaz pour aéronefs, tel qu'un turbofan - qui est un moteur double corps et double flux de gaz - comprend une soufflante qui est souvent entrainée directement par, et axialement disposée en amont d'une turbine basse pression (turbine BP ci-après), laquelle est située en aval d'une turbine haute pression (turbine HP ci-après). Une chambre de combustion est interposée axialement entre, en aval, la turbine HP et, en amont, un compresseur BP (basse pression) en aval duquel la turbomachine comprend aussi un compresseur HP (haute pression). Cette configuration à soufflante entrainée directement par la turbine BP a pour inconvénient de faire tourner la soufflante à la même vitesse de rotation que la turbine BP. Or pour obtenir de bonnes consommations spécifiques et un niveau de bruit réduit il convient de faire tourner cette soufflante le plus lentement possible, tout en adaptant le profil des pales pour conserver un débit et une vitesse de l'air importants et donc le niveau de poussée désiré. Outre une solution consistant à placer un réducteur sur l'arbre qui relie la soufflante et la turbine BP, il a déjà été proposé, dans US20180258858 et comme alternative de moteur turbofan, que, la turbine s'étendant autour d'un axe (X), elle comprenne :
- un premier rotor comprenant des premières roues mobiles, et
- un second rotor comprenant des secondes roues mobiles, les premier et second rotors étant montés tournants autour dudit axe (X), le premier rotor et le second rotor étant configurés pour tourner en sens inverse, certaines au moins des secondes roues mobiles étant axialement intercalées entre certaines au moins des premières roues mobiles.

Ainsi, par exemple dans FR2942273, la turbine BP comprend un premier rotor dont une partie tourne axialement autour des secondes roues mobiles. La soufflante est entrainée par le second rotor via le second arbre de turbine et par le premier rotor, via le premier arbre de turbine, lequel tourne en sens inverse du second arbre, une turbine contrarotative ayant l'avantage de présenter un encombrement réduit pour réaliser la même fonction qu'une turbine classique.

### Présentation de l'invention

Parmi les problèmes auxquels l'invention souhaite apporter une solution, on peut noter ce qui suit :
- ce que l'on considérera comme le second rotor est une pièce critique qu'il convient de préserver,
- il faut si possible éviter à ce second rotor des dégradations pouvant être causées notamment par la libération d'aubes dont sont pourvues lesdits rotors, ou de partie de ces aubes, ceci particulièrement si de telles libérations ne sont pas rapidement détectées,
- on doit assurer la rétention des aubes du premier rotor.

### Résumé de l'invention

Une solution proposée à tout ou partie des problèmes ci-dessus consiste en ce que la turbine à gaz ci-avant connue soit telle qu'elle comprenne en outre un anneau auquel est fixé du matériau abradable,
- l'anneau s'étendant autour dudit axe de rotation, entre les(l'une au moins des) premières roues mobiles et le second rotor, et
- axialement entre une extrémité amont et une extrémité aval de l'anneau, l'anneau étant maintenu avec le second rotor.

Ainsi, et en d'autres termes, la turbine comprend un dit anneau auquel est fixé du matériau abradable, l'anneau s'étendant autour d'une des premières roues mobiles avec laquelle le matériau abradable doit coopérer.

En effet, le matériau abradable est interposé entre l'anneau et ladite une des premières roues mobiles, autour de cette roue mobile.

Le matériau abradable est donc fixe par rapport à l'anneau ; par contre ladite une des premières roues mobiles est mobile (tourne autour de l'axe X) par rapport au matériau abradable.,

En entrant en contact avec le matériau abradable, lors de la rotation de la turbine, la première roue mobile coopère, ou s'engage, avec lui.

Ceci participe à une rétention des aubes des premières roues mobiles, sans dégrader une partie (radialement extérieure) du second rotor. En effet, sur une turbine classique (c'est-à-dire qui ne comporte qu'un rotor interne, sans rotor externe, mais avec un stator externe à la place) tout dit anneau est fixé au stator externe qui est typiquement un carter fixe de turbine, lequel assure alors la fonction de rétention : l'anneau n'est dans ce cas qu'un complément dans la rétention. De ce fait, les anneaux de turbine classique sont sous forme de secteurs, ce qui facilite notamment la fabrication et la tenue mécanique de ces derniers. Sur la turbine contrarotative de l'invention, les anneaux sont fixés avec ledit second rotor. De ce fait, la rétention des aubes du premier rotor (dont les aubes peuvent typiquement être - radialement - internes par rapport à une partie du second rotor qui les entoure) doit être assurée par un ou plusieurs anneaux solides, résistants, afin de protéger le second rotor (sa partie entourante précitée).

On pourra choisir favorablement que l'anneau s'étende sur un secteur angulaire compris entre 350 et 360°.

Ainsi, on pourra préférer un anneau fabriqué de manière axisymétrique et donc sur 360°, ne pouvant s'ouvrir sous le choc d'une aube libérée et optimal pour la rétention. Mais on pourra aussi choisir un anneau fendu entre 350° et moins de 360°, de sorte à faciliter le montage de l'anneau et la maintenance.

En outre, avec un positionnement axial comme précité de son(ses) maintien(s) sur le second rotor, l'anneau va disposer d'une certaine capacité de dilatation axiale, lorsque la turbine fonctionnera.

Pour favoriser cela, il est d'ailleurs proposé qu'axialement, ledit maintien de l'anneau avec le second rotor soit situé plus près du centre de l'anneau que desdites extrémités amont et aval.

Axialement l'anneau sera maintenu avec le second rotor par un couplage en rotation pouvant comprendre un crabotage (voir ci-après).

Avec des telles extrémités amont et aval pouvant être fixées axialement (et de préférence radialement) uniquement par ledit couplage en rotation, l'anneau disposera d'une liberté favorable de déformation, sans réelle contrainte, lorsque la turbine fonctionnera.

Et un maintien de l'anneau proche axialement de son centre favorisera un équilibrage plus précis de l'anneau et moins de vibrations dans la turbine.

Selon une autre caractéristique, il est d'ailleurs aussi proposé que, pour son dit maintien avec le second rotor, l'anneau présente une portée cylindrique centrale qui s'étend axialement au niveau du centre de l'anneau.

Cette position permet de réaliser efficacement et facilement, en fabrication et au montage, l'équilibrage de l'anneau.

Favorablement, la portée cylindrique sera frettée dans le second rotor.

L'avantage est un centrage très précis de l'anneau sur le second rotor.

Il est aussi proposé que :
- ledit anneau présente deux premières surfaces cylindriques axiales respectivement amont et aval, situées l'une plus en amont que l'autre, en périphérie extérieure de l'anneau,
- le second rotor présente deux secondes surfaces cylindriques axiales, respectivement amont et aval, situées radialement en face respectivement des premières surfaces cylindriques amont et aval, en périphérie intérieure d'une partie du second rotor, et
- un jeu radial est établi, en fonctionnement normal de la turbine, entre les premières et secondes surfaces cylindriques respectivement de l'anneau et de ladite partie du second rotor.

Ce qui, précède permet d'assurer et de bien maitriser les jeux de fonctionnement, et notamment de dilatations différentielles, entre le matériau abradable et les aubes du premier rotor. De plus, et spécifiquement pour les turbines contrarotatives, le centrage précis de l'anneau sur le second rotor permet aussi un équilibrage plus précis et donc moins de vibrations dans la turbine.

Selon encore une autre caractéristique, il est proposé que, pour un arrêt axial de l'anneau et pour son dit maintien avec le second rotor, un couplage en rotation soit établi entre l'anneau et le second rotor.

De préférence, ce couplage en rotation sera établi en partie axialement centrale de l'anneau. Ainsi, un arrêt axial efficace et une fixation sécuritaire, et de nouveau équilibrée, en termes de contraintes mécaniques sera assurée entre l'anneau et le second rotor.

Pour compléter dans le même but cette liaison en rotation, il est aussi proposé que ledit couplage en rotation inclus une butée axiale entre au moins une excroissance saillante radialement vers l'extérieur sur l'anneau et au moins une gorge coopérante, sur le second rotor.

Favorablement, le couplage en rotation comprendra un crabotage (Dog clutch coupling). Ceci permettra un arrêt en translation proche du centrage précité de l'anneau et participera à diminuer les contraintes axiales dans ce dernier. Il s'agit d'une solution qui se complète avec celle de l'anneau non sectorisé.

Par ailleurs, favorablement, une portée circonférentielle (dite aussi tangentielle) sera établie entre l'anneau et les aubages, directement en aval de l'anneau ; typiquement de façon adjacente aux premières et secondes surfaces cylindriques axiales aval précitées, si elles existent. Pour cela, un moyen de couplage en rotation via ergot et mortaise pourra relier ledit anneau à la seconde roue mobile axialement adjacente.

Ceci doit :
- permettre d'arrêter l'anneau en rotation (autour de l'axe X), de façon efficace et assez facile à réaliser et à monter, et
- empêcher ainsi son dé-crabotage.

De préférence, le matériau abradable se présentera circonférentiellement comme une succession de secteurs d'anneau.

La fabrication, le montage du matériau abradable sur l'anneau et son remplacement seront alors facilités.

Selon encore une autre caractéristique, il est aussi ici proposé une turbomachine à gaz pour aéronef, la turbomachine présentant une entrée amont, où entre du gaz, et une sortie aval, où sort du gaz, la turbomachine comprenant :
- la turbine précitée, qui est une turbine BP, avec tout ou partie de ses caractéristiques, et
- une turbine HP située en amont de la turbine BP.

### Brève description des figures

[Fig. 1] représente une vue schématique en coupe axiale d'une possible réalisation de turbomachine à réducteur et à turbine contrarotative selon l'invention,
[Fig. 2] représente un schéma agrandi des premier et second rotors ; zone II figure 1,
[Fig. 3] représente un schéma d'un ensemble comprenant un dit anneau (66 ci-après) auquel est fixé du matériau abradable (68 ci-après),
[Fig. 4] représente une variante de réalisation dudit ensemble,
[Fig. 5] représente un schéma d'une coupe verticale en zone V de la [Fig. 2],
[Fig. 6] représente une vue en perspective avec arrachement de cette zone V,
[Fig. 7] représente une variante de réalisation de ladite zone V,
[Fig. 8] représente une autre variante de réalisation de cette zone V,
[Fig. 9] représente le schéma de la [Fig. 6], à un autre endroit de la circonférence,
[Fig. 10] représente la coupe X-X de la [Fig. 9], et
[Fig. 11] représente la zone autour du creux 823 de la [Fig. 10].

### Description détaillée de l'invention

Ce qui suit se réfère à des réalisations qui ne sont présentées qu'à titres d'exemples.

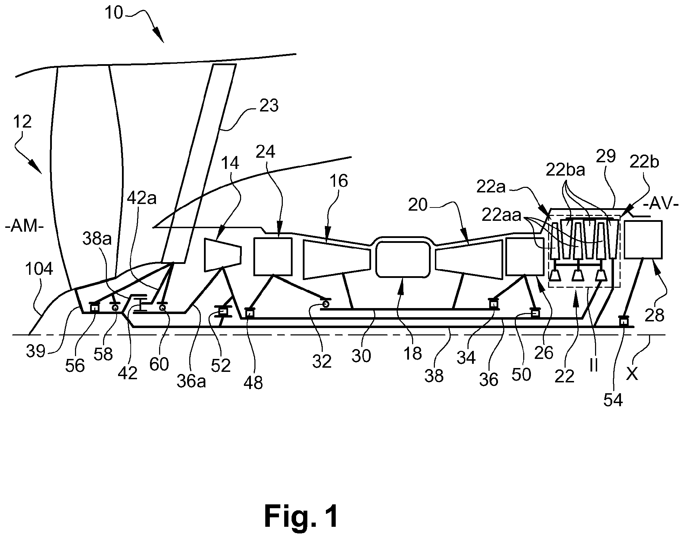

Le schéma de la figure 1 illustre donc une turbomachine 10 à turbine contrarotative et à réducteur pour un aéronef.

Cette turbomachine 10 comprend d'amont en aval, dans le sens d'écoulement des gaz axialement d'amont (AM) vers l'aval (AV), une soufflante 12, un compresseur basse pression 14, un compresseur haute pression 16, une chambre annulaire de combustion 18, une turbine haute pression 20 et une turbine contrarotative 22, à plus basse pression (dite aussi BP).

La référence 23 désigne un carter d'entrée situé entre la soufflante 12 et le compresseur 14. La référence 24 désigne un carter intermédiaire situé entre les compresseurs 14 et 16, et la référence 26 désigne un carter de turbine (du type TVF) situé entre les turbines 20 et 22. La référence 28 désigne un carter d'échappement (du type TRF).

Le rotor de la turbine haute pression 20 entraîne en rotation le rotor du compresseur haute pression 16 par un arbre haute pression 30 qui est centré et guidé en rotation par des paliers, tels qu'un palier amont 32 et un palier aval 34.

La turbine contrarotative 22 comprend un premier rotor 22a dont des roues 22aa (dites aussi premières roues mobiles) sont configurées pour tourner dans un premier sens de rotation et sont reliées à un premier arbre de turbine 36, et un second rotor 22b dont des roues 22ba (dites aussi secondes roues mobiles) sont configurées pour tourner dans un sens opposé de rotation et sont reliées à un second arbre de turbine 38. Les roues 22ba sont intercalées axialement entre les roues 22aa. Les premier et second rotors 22a, 22b sont entourés par un carter 29 dont une extrémité aval comprend une bride de fixation au carter d'échappement 28. Le premier arbre 36 s'étend dans l'exemple axialement à l'intérieur de l'arbre 30 et entraîne en rotation le rotor du compresseur basse pression 14. Le premier arbre 36 est en outre accouplé à un arbre d'entrée 36a qui est engrené avec un solaire ou planétaire d'un réducteur mécanique 42 par exemple à train épicycloïdal. L'arbre d'entrée 36a est ainsi solidaire en rotation de l'arbre 36.

Le second arbre 38 s'étend dans l'exemple axialement à l'intérieur de l'arbre 36 et entraîne en rotation la soufflante 12. Le second arbre 38 est accouplé à un carter de soufflante 39 ainsi qu'à un arbre de sortie 38a qui est 5 engrené avec la couronne du réducteur 42.

Le réducteur 42 comprend en outre des satellites engrenés respectivement avec le solaire et la couronne et portés par un porte-satellites 42a. Le porte satellite peut être fixe ou mobile. Dans un réducteur dit épicycloïdal il est mobile, dans un réducteur dit planétaire il est fixe. Le porte-satellites 42a sera donc, ou non, fixé au carter d'entrée 23.

Le premier arbre 36 est centré et guidé à l'amont par un palier 48 monté entre le premier arbre 36 et le carter intermédiaire 24, et à l'aval par un palier 50 monté entre le premier arbre 36 et le carter de turbine 26.

Le second arbre 38 est centré et guidé à l'amont par un palier 52 monté entre le second arbre 38 et le premier arbre 36, et à l'aval par un palier 54 montré entre le second arbre 38 et le carter d'échappement 28.

L'arbre de soufflante 39 et l'arbre de sortie 38a sont guidés par un palier amont 56 et par un palier aval 58. Ces paliers 56, 58 sont situés en amont du réducteur 42, entre l'arbre de soufflante 39 et de l'arbre de sortie 38a, d'une part, et le carter d'entrée 23, d'autre part. En aval du réducteur 42, un palier 60 guide en rotation l'arbre d'entrée 36a et est monté entre cet arbre et le carter d'entrée 23.

Tant les roues 22aa que les roues 22ba comprennent en périphérie extérieure des aubes, référencées respectivement 221 et 222.

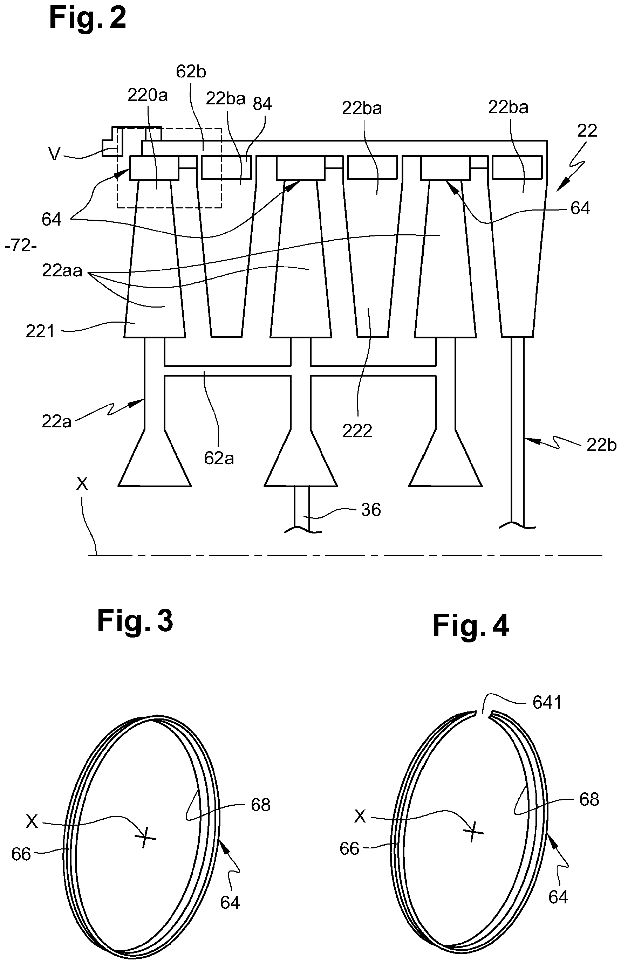

Sur le schéma de la figure 2, on voit mieux que les roues 22aa sont couplées par une partie 62a du premier rotor 22a pour tourner ensemble, et les roues 22ba sont couplées par une partie 62b du second rotor 22b pour également tourner ensemble.

Les parties 62a du premier rotor 22a et 62b du second rotor 22b peuvent être chacune définies par une partie annulaire, monobloc sur 360° autour de l'axe X.

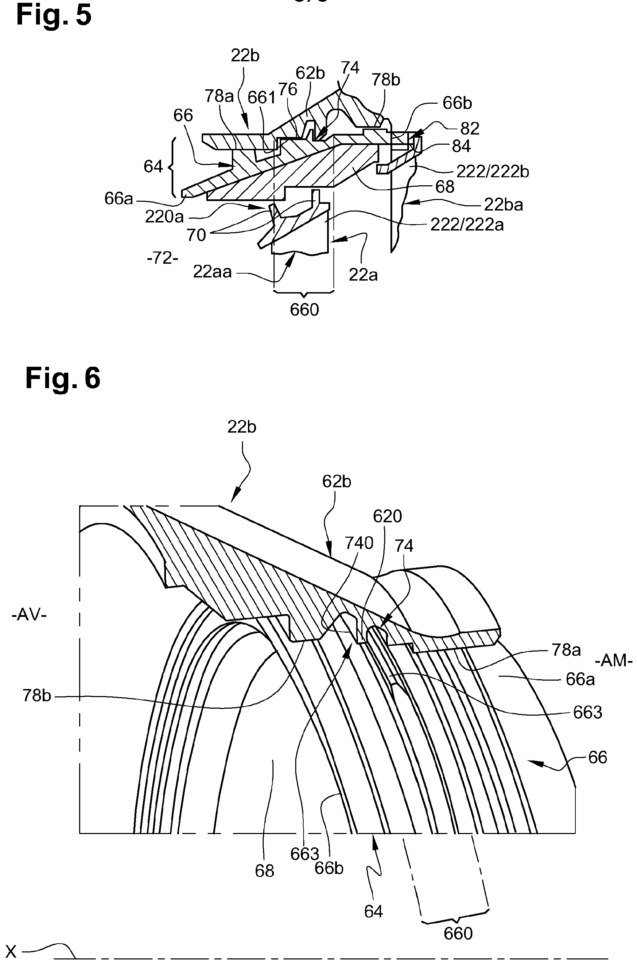

La partie 62b entoure les roues 22ba, mais aussi les roues 22aa, ainsi que la partie 62a Une zone de la partie 62b se voit mieux figure 6.

Conformément à l'invention, au moins un ensemble 64 (référencé comme tel notamment en figure 2) comprenant au moins un anneau 66 s'étendant circonférentiellement sur un secteur compris entre 350 et 360° et auquel est fixé du matériau abradable 68 (voir figures 4-6) est interposé radialement entre la partie 62b et les extrémités extérieures libres 220a des aubes des roues 22aa.

En périphérie extérieure, les (aubes des) roues 22aa présentent des léchettes 70, au nombre d'au moins une par aube.

Pour l'étanchéité dans la veine de gaz 72 où s'étendent les aubes 221 et 222, les léchettes 70 (dites en anglais knife edge sealing ou rubbing strip seal) entrent en contact avec le matériau abradable 68 lors de la rotation de la turbine 22.

L'anneau 66, qui s'étend donc autour dudit axe de rotation X, entre les premières roues mobiles 22aa) et le second rotor 22b, est non sectorisé, comme le voit bien figure 3 ou 4.

En outre, pour favoriser le fait que l'anneau 66 dispose d'une certaine capacité de dilatation axiale, lorsque la turbine fonctionne, il est prévu qu'axialement, entre une extrémité amont 66a et une extrémité aval 66b de l'anneau, cet anneau soit maintenu sur le second rotor 22b (sa partie 62b), fixé avec ; voir notamment figures 5-6.

Pour favoriser encore davantage cela, et donc encore minimiser les contraintes dues aux dilatations axiales différentielles entre l'anneau 66 et le second rotor 22b, en s'assurant que les extrémités amont et aval de l'anneau soient bien libres de se dilater axialement, il est même proposé qu'axialement, le maintien (le singulier n'exclut pas plusieurs maintiens) de l'anneau 66 avec le second rotor 22b soit situé plus près du centre de l'anneau -voir zone 660 figures 5 à 8 - que desdites extrémités amont 66a et aval 66b, où l'anneau ne sera alors pas maintenu axialement avec le second rotor 22b.

Maintenu dans une telle zone 660 proche axialement de son centre, l'anneau sera bien équilibré et moins de vibrations seront générées dans la turbine.

En termes de maintien, il est proposé :
- que l'anneau 66 présente une portée cylindrique 661 centrale située donc, parallèlement à l'axe X de rotation, sensiblement au centre de l'anneau (voir notamment figures 5,7 et 8).
- qu'un couplage en rotation 74 soit établi entre l'anneau 66 et le second rotor 22b (sa partie 62b), en partie axialement centrale 660 de l'anneau (voir les mêmes figures).

La portée cylindrique 661 centrale serait ainsi présente en périphérie externe de l'anneau, en face et radialement au contact, à l'arrêt et lorsque la turbine fonctionne, avec un appui cylindrique 76 prévu, de façon interne complémentaire, sur la partie 62b du second rotor 22b (voir notamment figures 5,7 et 8), ceci participant à une réalisation efficace et facile, en fabrication et au montage, de l'équilibrage de l'anneau. Favorablement, la portée cylindrique 661 sera frettée dans le second rotor.

Cela permet de mieux maitriser les jeux entre les abradables 68 et les éléments d'étanchéité 70 des aubes du premier rotor 22a prévus donc, chacun, en circonférence extérieure, d'une plateforme d'aube 222/222a (voir figure 5) du premier rotor, et devant coopérer, eux-mêmes en circonférence extérieure, avec l'abradable 68 alors prévu (fixé) sur la partie 62b, radialement en regard, du second rotor 22b.

Avec le couplage en rotation 74, la fixation sera sécuritaire et de nouveau équilibrée en termes de contraintes mécaniques entre l'anneau et le second rotor 22b.

Le couplage en rotation 74 peut inclure une butée axiale 740 entre au moins une excroissance 663 saillante radialement vers l'extérieur sur l'anneau 66 et au moins une gorge 620 radiale sur la partie 62b du second rotor ; cf. figures 6-8.

Chaque excroissance 663 pourra être formée par une dent, les dents étant circonférentiellement réparties, en plusieurs secteurs d'anneau.

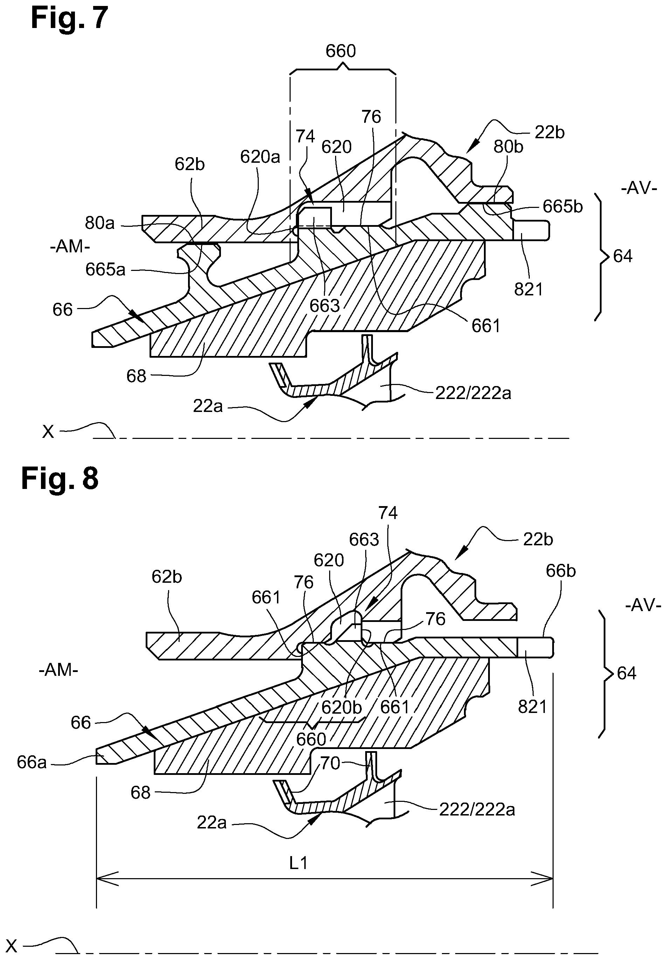

Bien que situés en partie axialement centrale 660, le couplage en rotation 74, et donc les excroissance(s) et gorge(s) coopérantes 663, 620, pourront être positionnées de différentes façons axialement par rapport audit centrage formé via la portée cylindrique 661 et son appui cylindrique 76 : juste en aval de ce centrage, comme dans la solution de la figure 5, en amont du centrage, comme dans la solution de la figure 7, ou au milieu de ce dernier comme dans la solution de la figure 8. Ainsi :
- dans la solution de la figure 7 est illustrée une excroissance 663 en appui côté amont contre une paroi amont 620a d'une gorge 620, tandis que les parois de centrage 661,76 sont situées davantage vers l'aval,
- dans la solution de la figure 8 est illustrée une excroissance 663 en appui côté aval contre une paroi aval 620b d'une gorge 620, tandis que les parois de centrage 661,76 se répartissent de façon adjacente axialement entre les continuités amont et en aval de ce couplage en rotation 74.

Si elle est dite « centrale », la portée cylindrique 76 sera située sensiblement au niveau du centre 660 de l'anneau : On définit le centre axial de l'anneau comme la moitié (à 15% près) de la longueur L1 (cf. figure 8) entre ses extrémités amont 66a et aval 66b, y compris la dent axiale 821 (voir ci-après). La partie axialement centrale 660 s'étend axialement de part et d'autre de ce centre, sur une longueur qui peut représenter entre 10% et 30% de la longueur L1. On peut envisager jusqu'à environ 25% d'un côté et environ 5% de l'autre, comme figure 8 où seule une partie au moins des parois de centrage 661,76 amont sont situées à l'amont du milieu de la longueur L1, le couplage en rotation 74 et la partie aval des parois de centrage 661,76 étant situés en aval de ce milieu.

Favorablement, le couplage en rotation 74 comprendra un crabotage (Dog clutch coupling). A cette fin, les excroissance(s) et gorge(s) 663, 620 pourront être inter-engagées pour former un crabotage circonférentiel. WO2016189222 ou FR3036433 fourni un exemple de crabotage. S'il y a eu frettage dudit centrage (voir ci-avant), ce frettage aura été adapté afin de permettre la rotation manuelle relative lors du crabotage.

Un tel arrêt en rotation et translation proche du centrage précité 76,661 de l'anneau participera de toute façon à diminuer les contraintes axiales dans ce dernier.

Il s'agit d'une solution qui se complète avec celle de l'anneau 66 non sectorisé.

A ce sujet, la figure 3 illustre un dit ensemble 64, dont un anneau 66, annulaire sur 360° autour de l'axe X, alors que la figure 4 illustre un ensemble 64, dont un anneau 66, annulaire sur 350°, donc se présentant comme un anneau fendu, en 641, sur sa circonférence. Même si cela permet un engagement avec déformation élastique circonférentielle, une telle solution fendue est moins sécuritaire que celle annulaire sur 360°, axisymétrique, qui ne peut s'ouvrir sous le choc d'une aube libérée.

L'abradable 68 sera de préférence, dans chaque cas, réalisé en blocs sectorisés ou non (non représentés), chacun pouvant être fixé de façon conventionnelle et amovible à l'anneau 66, en circonférence intérieure de ce dernier.

Comme schématisé plus particulièrement figures 5,7, il est aussi proposé que soient avantageusement prévus des appuis amont 78a et aval 78b entre l'anneau 66 et la partie 62b du second rotor, en cas de circonstance anormale : tel qu'impact d'aube ou surchauffe locale. Ces appuis amont 78a et aval 78b n'existeraient pas en fonctionnement normal de la turbine, ni à l'arrêt où un jeu radial serait alors présent entre les surfaces respectives référencées 665a, 80a à l'amont et 665b,80b à l'aval, pour l'anneau 66 et la partie 62b ; voir figure 7.

Ainsi, l'anneau 66 présentera alors deux premières surfaces cylindriques axiales respectivement amont 665a et aval 665b, situées l'une plus en amont que l'autre, en périphérie extérieure de l'anneau, et la partie 62b du second rotor présentera deux secondes surfaces cylindriques axiales, respectivement amont 80a et aval 80b, situées radialement en face respectivement des premières surfaces cylindriques amont et aval, en périphérie intérieure de ladite partie 62b.

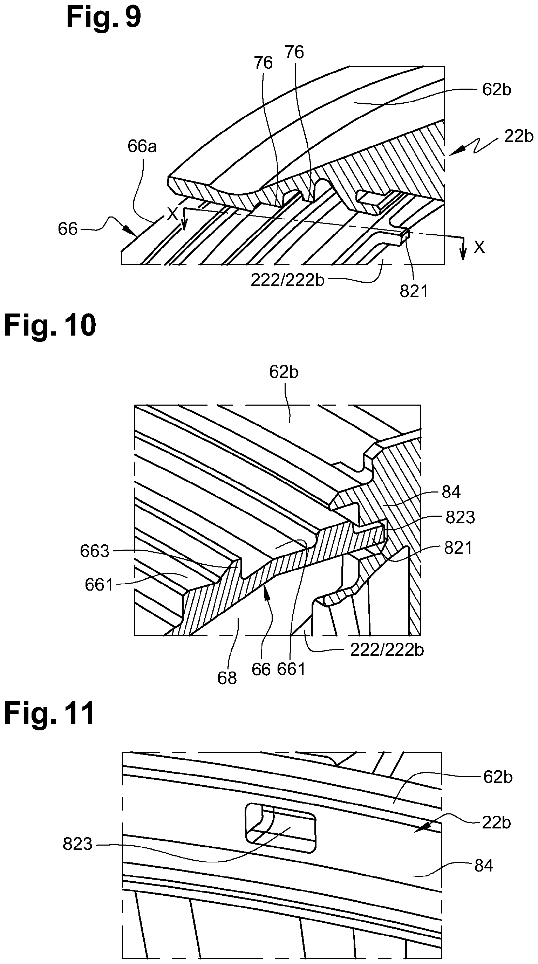

Ceci doit favoriser la maitrise des jeux de fonctionnement, et notamment de dilatations axiales, entre le matériau abradable 68 et les - éléments d'étanchéité 70 des - aubes 222 (ou 222a, 222b figure 5 ou 10) du second rotor.

A noter cependant que la solution de centrage - entre la portée cylindrique 661 centrale et l'appui cylindrique 76 - et de couplage en rotation 74 est indépendante de ces fonctions et peut être prévue seule sur l'anneau 66, comme schématisé sur la figure 8.

Dans cette solution, seuls (par rapport à ce qui précède) les maintiens par centrage, entre la portée cylindrique 661 centrale et l'appui cylindrique 76, et par couplage en rotation 74 sont conservés. Les surfaces cylindriques axiales d'appuis amont 78a et aval 78b en cas de circonstance anormale comme précité sont supprimées.

Quoi qu'il en soit, dans les deux cas, sera de préférence aussi prévu l'établissement d'au moins une portée circonférentielle (dite aussi tangentielle, autour de l'axe X) entre l'anneau 66 et une aube, telle que l'aube 222b qui en aval, sur la figure 5, est axialement adjacente à l'anneau 66 et qui est donc aussi axialement adjacente en aval à l'aube 222a dont les éléments d'étanchéité 70 coopèrent avec ledit abradable 68 ; voir figure 5 ou 10. Ainsi, en 82, un moyen de couplage en rotation via ergot et mortaise relie l'anneau 66 à la seconde roue mobile (22ba) axialement adjacente.

La portée circonférentielle 82 (ou chacune d'elle car il pourra y en avoir plusieurs circonférentiellement et/ou dès lors qu'il y a plusieurs rangées d'aubes sur la turbine, comme dans l'exemple de la figure 2 où il y en a trois) pourra être réalisée par une dent axiale 821 saillante vers l'aval sur le bord aval, en extrémité aval 66b de l'anneau 66 et engagée plutôt étroitement dans un creux 823 complémentaire formé en face amont d'une partie annulaire de liaison 84 que pourra présenter l'aube concernée (telle que celle 222/222b figure 10), pour sa fixation, en circonférence extérieure, à la partie 62b du second rotor 22b ; voir aussi figure 11. Ceci doit, de façon efficace et assez facile à réaliser et à monter, empêcher les dé-crabotages et permettre d'arrêter en rotation chaque anneau 66 par rapport à (la partie annulaire de liaison 84 de) la rangée adjacente aval d'aubes 222a des premières roues mobiles 22aa.

## Revendications

1. Turbine à gaz pour aéronef, la turbine s'étendant autour d'un axe (X) et comprenant un premier rotor (22a) comprenant des premières roues mobiles (22aa) et un second rotor (22b) comprenant des secondes roues mobiles (22ba), les premier et second rotors étant montés tournants autour dudit axe (X), le premier rotor (22a) et le second rotor (22b) étant configurés pour tourner en sens inverse, certaines au moins des secondes roues mobiles (22ba) étant axialement intercalées entre certaines au moins des premières roues mobiles (22aa), **caractérisée en ce que** :
- la turbine comprend en outre un anneau (66) auquel est fixé du matériau abradable (68), l'anneau (66) s'étendant autour d'une des premières roues mobiles (22aa) avec laquelle le matériau abradable (68) doit coopérer, et
- axialement entre une extrémité amont (66a) et une extrémité aval (66b) de l'anneau (66), l'anneau est maintenu avec le second rotor (22b).

2. Turbine selon la revendication 1, dans laquelle l'anneau (66) s'étend sur un secteur angulaire compris entre 350 et 360°.

3. Turbine selon la revendication 1 ou 2 dans laquelle, axialement, ledit maintien de l'anneau (66) avec le second rotor (22b) est situé plus proche du centre (660) de l'anneau que desdites extrémités amont et aval(22b).

4. Turbine selon l'une quelconque des revendications précédentes dans laquelle, pour son dit maintien avec le second rotor (22b), l'anneau (66) présente une portée cylindrique (76) centrale qui s'étend axialement au niveau du centre (660) de l'anneau (66).

5. Turbine selon la revendication 4, dans laquelle la portée cylindrique (76) de l'anneau est frettée dans le second rotor (22b).

6. Turbine selon l'une quelconque des revendications précédentes, dans laquelle :
- l'anneau (66) présente deux premières surfaces cylindriques axiales, respectivement amont et aval (665a,665b), situées l'une plus en amont que l'autre, en périphérie extérieure de l'anneau (66),
- le second rotor (22b) présente deux secondes surfaces cylindriques axiales, respectivement amont et aval (80a,80b), situées radialement en regard respectivement des premières surfaces cylindriques amont et aval (665a,665b), en périphérie intérieure d'une partie (62b) du second rotor (22b), et
- un jeu radial est établi, en fonctionnement normal de la turbine, entre les premières et secondes surfaces cylindriques respectivement de l'anneau (66) et de ladite partie (62b) du second rotor (22b).

7. Turbine selon l'une quelconque des revendications précédentes dans laquelle, pour un arrêt axial de l'anneau et pour son dit maintien avec le second rotor (22b), un couplage en rotation (74) est établi entre l'anneau (66) et le second rotor (22b).

8. Turbine selon la revendication 7, dans laquelle le couplage en rotation (74) est établi en partie axialement centrale (660) de l'anneau (66).

9. Turbine selon la revendication 7 ou 8, dans laquelle le couplage en rotation inclut une butée axiale entre au moins une excroissance (663) saillante radialement vers l'extérieur sur l'anneau (66) et au moins une gorge (620) coopérante, sur le second rotor (22b,62b).

10. Turbine selon l'une des revendications 7 à 9, dans laquelle le couplage en rotation comprend un crabotage.

11. Turbine selon l'une quelconque des revendications précédentes, dans laquelle un moyen de couplage en rotation de type tenon et mortaise relie l'anneau (66) à la seconde roue mobile (22ba) axialement adjacente.

12. Turbomachine à gaz pour aéronef, la turbomachine présentant une entrée amont, où entre du gaz, et une sortie aval, où sort du gaz, la turbomachine comprenant :
- ladite turbine (22) selon l'une quelconque des revendications précédentes, qui est une turbine basse pression, et
- une turbine haute pression (20) située en amont de la turbine basse pression (22).

## Patentansprüche

1. Gasturbine für Luftfahrzeuge, wobei sich die Turbine um eine Achse (X) erstreckt und einen ersten Rotor (22a) mit ersten Laufrädern (22aa) und einen zweiten Rotor (22b) mit zweiten Laufrädern (22ba) umfasst, wobei der erste und der zweite Rotor um die Achse (X) drehbar gelagert sind, wobei der erste Rotor (22a) und der zweite Rotor (22b) dazu ausgelegt sind, sich in entgegengesetzter Richtung zu drehen, wobei zumindest einige der zweiten Laufräder (22ba) axial zwischen zumindest einigen der ersten Laufräder (22aa) eingefügt sind, **dadurch gekennzeichnet, dass**:
- die Turbine ferner einen Ring (66) umfasst, an dem abreibbares Material (68) befestigt ist, wobei sich der Ring (66) um eines der ersten Laufräder (22aa) herum erstreckt, mit dem das abreibbare Material (68) zusammenwirken soll, und
- axial zwischen einem stromaufwärts gelegenen Ende (66a) und einem stromabwärts gelegenen Ende (66b) des Rings (66) der Ring mit dem zweiten Rotor (22b) gehalten wird.

2. Turbine nach Anspruch 1,
wobei sich der Ring (66) über einen Winkelsektor zwischen 350 und 360° erstreckt.

3. Turbine nach Anspruch 1 oder 2,
wobei axial die Halterung des Rings (66) mit dem zweiten Rotor (22b) näher am Zentrum (660) des Rings als an den stromaufwärts bzw. stromabwärts gelegenen Enden (22b) liegt.

4. Turbine nach einem der vorhergehenden Ansprüche,
wobei der Ring (66) für seine Halterung mit dem zweiten Rotor (22b) einen zentralen zylindrischen Sitz (76) aufweist, der sich axial im Bereich des Zentrums (660) des Rings (66) erstreckt.

5. Turbine nach Anspruch 4,
wobei der zylindrische Sitz (76) des Rings in den zweiten Rotor (22b) eingeschrumpft ist.

6. Turbine nach einem der vorhergehenden Ansprüche, wobei:
- der Ring (66) zwei erste stromaufwärts bzw. stromabwärts gelegene, axiale zylindrische Flächen (665a, 665b) aufweist, von denen die eine weiter stromaufwärts als die andere am Außenumfang des Rings (66) angeordnet ist,
- der zweite Rotor (22b) zwei zweite stromaufwärts bzw. stromabwärts gelegene, axiale zylindrische Flächen (80a, 80b) aufweist, die den jeweiligen ersten stromaufwärts bzw. stromabwärts gelegenen zylindrischen Flächen (665a, 665b) radial gegenüberliegend am Innenumfang eines Teils (62b) des zweiten Rotors (22b) angeordnet sind, und
- im Normalbetrieb der Turbine ein radiales Spiel zwischen den ersten und den zweiten zylindrischen Flächen des Rings (66) bzw. des genannten Teils (62b) des zweiten Rotors (22b) besteht.

7. Turbine nach einem der vorhergehenden Ansprüche,
wobei für eine axiale Arretierung des Rings und für seine Halterung mit dem zweiten Rotor (22b) eine Drehkopplung (74) zwischen dem Ring (66) und dem zweiten Rotor (22b) erfolgt.

8. Turbine nach Anspruch 7,
wobei die Drehkopplung (74) im axial zentralen Teil (660) des Rings (66) erfolgt.

9. Turbine nach Anspruch 7 oder 8,
wobei die Drehkopplung einen axialen Anschlag zwischen zumindest einem radial nach außen vorstehenden Vorsprung (663) am Ring (66) und zumindest einer damit zusammenwirkenden Nut (620) am zweiten Rotor (22b, 62b) umfasst.

10. Turbine nach einem der Ansprüche 7 bis 9,
wobei die Drehkopplung formschlüssig erfolgt.

11. Turbine nach einem der vorhergehenden Ansprüche,
wobei eine Drehkopplungseinrichtung nach Art einer Nut- und Federverbindung den Ring (66) mit dem axial benachbarten zweiten Laufrad (22ba) verbindet.

12. Gas-Turbotriebwerk für Luftfahrzeuge, wobei das Turbotriebwerk einen stromaufwärtigen Einlass, bei dem Gas eintritt, und einen stromabwärtigen Auslass, bei dem Gas austritt, aufweist, wobei das Turbotriebwerk umfasst:
- die Turbine (22) nach einem der vorhergehenden Ansprüche, bei der es sich um eine Niederdruckturbine handelt, und
- eine Hochdruckturbine (20), die stromaufwärts von der Niederdruckturbine (22) angeordnet ist.

## Claims

1. A gas turbine for an aircraft, the turbine extending about an axis (X) and comprising a first rotor (22a) comprising first impellers (22aa) and a second rotor (22b) comprising second impellers (22ba), the first and second rotors being rotatably mounted about said axis (X), the first rotor (22a) and the second rotor (22b) being configured to rotate in opposite directions, with at least some of the second impellers (22ba) being axially interposed between at least some of the first impellers (22aa), **characterised in that**:
- the turbine further comprises a ring (66) to which an abradable material (68) is secured, the ring (66) extending around one of the first impellers (22aa) with which the abradable material (68) is to cooperate, and
- axially between an upstream end (66a) and a downstream end (66b) of the ring (66), the ring is held with the second rotor (22b).

2. The turbine according to claim 1, wherein the ring (66) extends over an angular sector of between 350 and 360°.

3. The turbine according to claim 1 or 2 wherein, axially, said holding of the ring (66) with the second rotor (22b) is located closer to the centre (660) of the ring than said upstream and downstream ends (22b).

4. The turbine according to any one of the preceding claims wherein, for said holding with the second rotor (22b), the ring (66) has a central cylindrical bearing (76) which extends axially at the centre (660) of the ring (66).

5. The turbine according to claim 4, wherein the cylindrical seat (76) of the ring is shrunk into the second rotor (22b).

6. The turbine according to any of the preceding claims, wherein:
- the ring (66) has two first axial cylindrical surfaces, respectively upstream and downstream (665a, 665b), located one further upstream than the other, at an outer periphery of the ring (66),
- the second rotor (22b) has two second axial cylindrical surfaces, respectively upstream and downstream (80a, 80b), located radially opposite the first upstream and downstream cylindrical surfaces (665a, 665b), respectively, at an inner periphery of a portion (62b) of the second rotor (22b), and
- a radial clearance is established, during normal operation of the turbine, between the first and second cylindrical surfaces respectively of the ring (66) and of said portion (62b) of the second rotor (22b).

7. The turbine according to any one of the preceding claims wherein, for an axial stop of the ring and for said holding with the second rotor (22b), a rotational coupling (74) is established between the ring (66) and the second rotor (22b).

8. The turbine according to claim 7, wherein the rotational coupling (74) is located at an axially central portion (660) of the ring (66).

9. The turbine according to claim 7 or 8, wherein the rotational coupling includes an axial abutment between at least one radially outwardly projecting protrusion (663) on the ring (66) and at least one co-operating groove (620) on the second rotor (22b,62b).

10. The turbine according to any of claims 7 to 9, wherein the rotational coupling comprises a dog clutch.

11. The turbine according to any one of the preceding claims, wherein a mortise and tenon type rotational coupling means connects the ring (66) to the second impeller (22ba) which is axially adjacent thereto.

12. A gas turbine engine for an aircraft, the engine having an upstream inlet, into which gas enters, and a downstream outlet, from which gas exits, the engine comprising:
- the said turbine (22) according to any of the preceding claims, which is a low-pressure turbine, and
- a high-pressure turbine (20) located upstream of the low-pressure turbine (22).
